# EUROPEAN PATENT SPECIFICATION

(11) **EP 2 028 802 B1**
(45) Date of publication and mention of the grant of the patent: **23.01.2013**
(21) Application number: 08162598.0
(22) Date of filing: 29.09.2003
(51) Int. Cl.: H04L 29/12

(54) **Information processing System, server and method for equipment identifier management**
Vorrichtung, System und Verfahren zur Verwaltung von Gerätebezeichnern
Dispositif, système et procédé de traitement d'identifiants des appareils

(30) Priority: 30.09.2002 JP 2002286739
(43) Date of publication of application: 25.02.2009
(62) Divisional of application: 03751287.8
(73) Proprietor: Panasonic Corporation, Kadoma-shi Osaka 571-8501 (JP)
(72) Inventor: Maekawa, H. c/o Matsushita Elect. Ind. Co., Ltd, Chuo-ku Osaka 540-6207 (JP); Hamai, Shinji c/o Matsushita Elect. Ind. Co., Ltd, Chuo-ku Osaka 540-6207 (JP); Mitsushio, H. c/o Matsushita Elect. Ind. Co., Ltd, Chuo-ku Osaka 540-6207 (JP); Takeda, H. c/o Matsushita Elect. Ind. Co., Ltd, Chuo-ku Osaka 540-6207 (JP); Kunihira, T. c/o Matsushita Elect. Ind. Co., Ltd, Chuo-ku Osaka 540-6207 (JP); Oka, Yoshihiro c/o Matsushita Elect. Ind. Co., Ltd, Chuo-ku Osaka 540-6207 (JP)
(74) Representative: Grünecker, Kinkeldey, Stockmair & Schwanhäusser

(56) References cited:
- HUI S-C ET AL: "A dynamic IP addressing system for Internet telephony applications" COMPUTER COMMUNICATIONS, ELSEVIER SCIENCE PUBLISHERS BV, AMSTERDAM, NL, vol. 21, no. 3, 25 March 1998 (1998-03-25) , pages 254-266, XP004115293 ISSN: 0140-3664
- MIDCOM WG J ROSENBERG DYNAMICSOFT J WEINBERGER DYNAMICSOFT C HUITEMA MICROSOFT R MAHY CISCO: "STUN - Simple Traversal of UDP Through NATs; draft-ietf-midcom-stun-00.txt" IETF STANDARD-WORKING-DRAFT, INTERNET ENGINEERING TASK FORCE, IETF, CH, vol. midcom, 5 April 2002 (2002-04-05), XP015022943 ISSN: 0000-0004
- DROMS BUCKNELL UNIVERSITY R: "Dynamic Host Configuration Protocol; rfc1541.txt" IETF STANDARD, INTERNET ENGINEERING TASK FORCE, IETF, CH, 1 October 1993 (1993-10-01), XP015007328 ISSN: 0000-0003

## Description

### TECHNICAL FIELD

The present invention relates to an information processing system, etc. in which electronic equipment and a server device communicate with each other.

### BACKGROUND ART

In an information processing system including electronic equipment, an information processing device and a server device, when electronic equipment such as a home computer, a television, and the like is accessed by an external device such as a portable telephone, it is necessary to update information such as an IP address (address information) at the side of WAN (Wide area network) of the information processing device represented by a router managed by the server device and an electronic equipment identifier such as a port number of the electronic equipment, etc.

The scientific paper of Siu-Cheung Hui and Shubert Foo entitled "A dynamic IP addressing system for Internet telephony applications" published in Computer Communications discusses a dynamic IP addressing system to support the establishment of connections between users. In particular, this paper discloses using an exchange server for maintaining and managing the information of active registered users. In response to a query including the identity of a recipient, the exchange server returns the corresponding IP address of the recipient.

A first method to update the address information of the server device and the electronic equipment identifier includes a method using UPnP (Universal plug and play). UPnP is a standard for connecting household electrical appliances to a computer via a network so as to provide functions with each other. Equipment corresponding to UPnP has information for connecting by itself, so that it can be used on the network from the time it is connected to the network.

A second method includes a server mode mentioned below. In the server mode, the server device always stores up-to-date IP address of the information processing device and port number of the electronic equipment in a database, and searches the database so as to notify up-to-date IP address of the information processing device and port number of the electronic equipment to the electronic equipment via the information processing device every time (usually regularly).

However, according to the above-mentioned first conventional technology, the information processing device such as a router must correspond to UPnP. In the future, to routers that do not correspond to UPnP, which have been already provided all over the world, electronic equipment capable of normally accessing from the outside cannot be connected.

Furthermore, according to the second conventional technolagy, the server device has much load to search database. In the near future, when a large number of electronic equipment is connected to the network, the server device is to manage records (electronic equipment information) including several ten million IP addresses, etc. In such a case, the server device has huge load to search database.

### SUMMARY OF THE INVENTION

There is provided an information processing system a server device, a program and method according to the appended claims.

### BRIEF DESCRIPTION OF THE DRAWINGS

FIG. 1 is a conceptual diagram showing an information processing system according to a first exemplary embodiment.
FIG. 2 is a block diagram showing the information processing system according to the first exemplary embodiment.
FIG. 3 is a flowchart to illustrate an operation of electronic equipment according to the first exemplary embodiment.
FIG. 4 is a flowchart to illustrate an operation of an information processing device according to the first exemplary embodiment.
FIG. 5 is a flowchart to illustrate an operation of a server device according to the first exemplary embodiment.
FIG. 6 is a conceptual diagram showing an information processing system according to the first exemplary embodiment.
FIG. 7 is a conceptual diagram showing the information processing system according to the first exemplary embodiment.
FIG. 8 is a conceptual diagram showing the information processing system according to the first exemplary embodiment.
FIG. 9 is a view showing an electronic equipment management table according to the first exemplary embodiment.
FIG. 10 is a block diagram showing an information processing system according to a second exemplary embodiment.
FIG. 11 is a flowchart to illustrate an operation of electronic equipment according to the second exemplary embodiment.
FIG. 12 is a flowchart to illustrate an operation of an information processing device according to the second exemplary embodiment.
FIG. 13 is a flowchart to illustrate an operation of a server device according to the second exemplary embodiment.
FIG. 14 is a conceptual diagram showing an information processing system according to the second exemplary embodiment.
FIG. 15 is a block diagram showing an information processing system according to a third exemplary embodiment.
FIG. 16 is a flowchart to illustrate an operation of a server device according to the third exemplary embodiment.
FIG. 17 is a conceptual diagram showing an information processing system according to the third exemplary embodiment.
FIG. 18 is a view to illustrate sending and receiving of information according to the third exemplary embodiment.

### DETAILED DESCRIPTION OF PREFERRED EMBODIMENTS

Hereinafter, exemplary embodiments of an information processing system including a receiving device and an information processing device, etc. are described with reference to drawings. Note here that in the exemplary embodiments, since elements provided with the same reference numerals carry out similar operations, the descriptions therefore may be omitted in some cases.

### (FIRST EXEMPLARY EMBODIMENT)

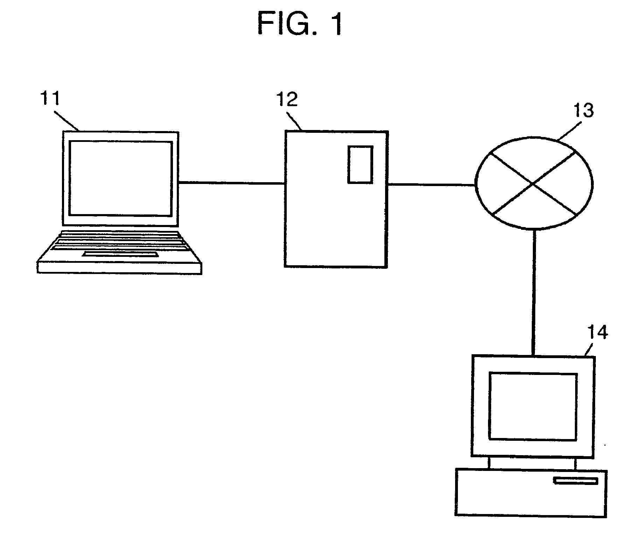

FIG. 1 is a conceptual diagram showing an information processing system according to the first exemplary embodiment. The information processing system includes electronic equipment 11, information processing device 12, the Internet 13 and server device 14.

For example, electronic equipment 11 cannot have a global IP address and is provided with a local IP address from information processing device 12 so as to be connected to the Internet 13. Note here that a global IP address is an example of the address information. Address information is an address (information) with which an external device (an external device, etc. connected to the Internet) communicates with an electronic equipment and may be any addresses (information) other than a global IP address as long as they can realize such a function. For example, in a case where a plurality of LANs (Local area networks) using private IP are connected by a router having a NAT (Network address translator) function, an address of the LAN at the side that a server of the router is located is the address information denoted herein. Furthermore, the address information may be taken as a combination of an IP address and a port number. In the present invention, first address information, second address information and third address information are respectively one of the address information. Furthermore, electronic equipment 11 may be a computer, a microwave oven, a telephone, a printer, a facsimile machine, a refrigerator, a television, a set-top box, and others.

Information processing device 12 herein has a function of connecting electronic equipment 11 and the Internet 13 with each other. Specifically, it has a path control function, a network address translation (NAT) function, and the like. Information processing device 12 is, for example, equipment called a router. Information processing device 12 holds a global IP address. That is to say, information processing device 12 has a function of connecting electronic equipment 11 that can only a private IP address to the Internet.

The server device 14 is connected to the Internet 13 and receives information from electronic equipment 11 via information processing device 12 so as to process thereof.

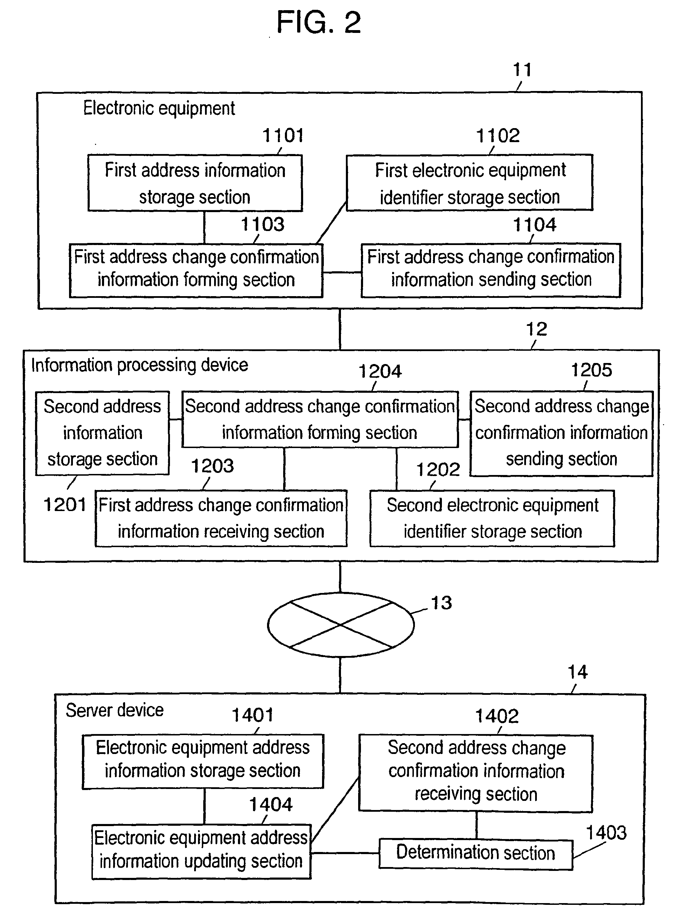

Next, FIG. 2 is a block diagram showing an information processing system according to the first exemplary embodiment. Electronic equipment 11 includes first address information storage section 1101, first electronic equipment identifier storage section 1102, first address change confirmation information forming section 1103 and first address change confirmation information sending section 1104. Information processing device 12 includes second address information storage section 1201, second electronic equipment identifier storage section 1202, first address change confirmation information receiving section 1203, second address change confirmation information forming section 1204 and second address change confirmation information sending section 1205. Server device 14 includes electronic equipment address information storage section 1401, second address change confirmation information receiving section 1402, determination section 1403 and electronic equipment address information updating section 1404.

First address information storage section 1101 stores first address information showing an address with which server device 14 sends information to information processing device 12. The first address information is, for example, a global IP address at the side of WAN of information processing device 12 (router, etc.). The first address information is notified, for example, from server device 14 to electronic equipment 11 and thereby stored in first address information storage section 1101. First address information storage section 1101 can be realized by a nonvolatile recording medium or a volatile recording medium. Note here that the global IP address may be a 32-bit IP address of IPv4 (Internet protocol version 4) or may be a 128-bit IP address of IPv6 (Internet protocol version 6).

First electronic equipment identifier storage section 1102 stores a first electronic equipment identifier that is information with which information processing device 12 sends information to electronic equipment 11. The first electronic equipment identifier is, for example, a port number. The first electronic equipment identifier is notified from, for example, information processing device 12 to electronic equipment 11, and thereby stored in first electronic equipment identifier storage section 1102. First electronic equipment identifier storage section 1102 can be realized by a nonvolatile recording medium or a volatile recording medium.

First address change confirmation information forming section 1103 obtains the first address information from first address information storage section 1101, obtains the first electronic equipment identifier from first electronic equipment identifier storage section 1102 and forms first address change confirmation information containing the first address information and the first electronic equipment identifier. First address change confirmation information forming section 1103 can be usually realized by MPU, a memory, and the like. A processing procedure in which first address change confirmation information forming section 1103 forms the first address change confirmation information is usually realized by software, and the software is recorded in a recording medium such as a hard disk. However, it may be realized by hardware (leased line).

First address change confirmation information sending section 1104 sends the first address change confirmation information to information processing device 12. First address change confirmation information sending section 1104 can be realized by a wire or wireless communication means.

Second address information storage section 1201 stores second address information showing an address with which server device 14 sends information to information processing device 12. At present, the second address information is information showing an address with which server device 14 sends information to information processing device 12. Note here that the above-mentioned first address information may be invalid (cannot be used for communication because it is changed). Second address information storage section 1201 can be realized by a nonvolatile recording medium or a volatile recording medium.

Second electronic equipment identifier storage section 1202 stores a second electronic equipment identifier that is information with which information processing device 12 sends information to electronic equipment 11. The second electronic equipment identifier is, for example, a current port number of the electronic equipment 11. Note here that the above-mentioned fust electronic equipment identifier may be invalid (cannot be used for communication because it is changed). Second electronic equipment identifier storage section 1202 can be realized by a nonvolatile recording medium or a volatile recording medium.

First address change confirmation information receiving section 1203 receives first address change confirmation information. First address change confirmation information receiving section 1203 can be realized by a wire or wireless communication means.

Second address change confirmation information forming section 1204 obtains the second address information from second address information storage section 1201, obtains the second electronic equipment identifier from second electronic equipment identifier storage section 1202, and forms second address change confirmation information by writing the second address information and the second electronic equipment identifier in the first address change confirmation information. A data structure of the second address change confirmation information is not particularly limited. However, the server device 14 needs to know a data structure of the second address change confirmation information. Second address change confirmation information forming section 1204 can be usually realized by MPU, a memory, and the like. A processing procedure in which second address change confirmation information forming section 1204 forms the second address change confirmation information is usually realized by software, and the software is recorded in a recording medium such as a hard disk. However, it may be realized by hardware (leased line).

Second address change confirmation information sending section 1205 sends the second address change confirmation information to server device 14. Second address change confirmation information sending section 1205 can be realized by a wire or wireless communication means.

Electronic equipment address information storage section 1401 stores one or more pieces of electronic equipment address information containing third address information and a third electronic equipment identifier. Electronic equipment address information storage section 1401 can be realized by a nonvolatile recording medium or a volatile recording medium.

Second address change confirmation information receiving section 1402 receives second address change confirmation information. Second address change confirmation information receiving section 1402 can be realized by a wire or wireless communication means.

Determination section 1403 determines whether or not the first address information and the second address information, which are contained in the second address change confirmation information, agree with each other, or/and whether or not the first electronic equipment identifier and the second electronic equipment identifier, which are contained in the second address change confirmation information, agree with each other. Determination section 1403 can be usually realized by MPU, a memory, and the like. A processing procedure in which determination section 1403 makes the above-mentioned determination is usually realized by software, and the software is recorded in a recording medium such as a hard disk. However, it may be realized by hardware (leased line).

When determination section 1403 determines that the first address information and the second address information do not agree with each other or that the first electronic equipment identifier and the second electronic equipment identifier do not agree with each other, electronic equipment address information updating section 1404 rewrites third address information or/and a third electronic equipment identifier of the electronic equipment address information containing third address information agreeing with the first address information contained in the second address change confirmation information and a third electronic equipment identifier agreeing with the first electronic equipment identifier contained in the second address change confirmation information to second address information or/and second electronic equipment identifier contained in the second address change confirmation information. Electronic equipment address information updating section 1404 can be usually realized by MPU, a memory, and the like. A processing procedure in which electronic equipment address information updating section 1404 updates as mentioned above can be usually realized by software, and the software is recorded in a recording medium such as a hard disk. However, it may be realized by hardware (leased line).

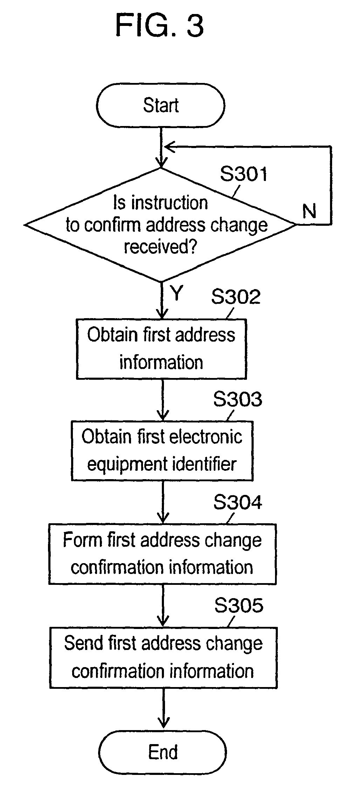

Hereinafter, an operation of the information processing system is described. Firstly, an operation of electronic equipment 11 is described with reference to the flowchart shown in FIG. 3.

(Step S301) First address change confirmation information forming section 1103 determines whether or not an instruction to confirm an address change was received. For example, electronic equipment 11 issues an instruction to confirm an address change automatically and regularly. When the instruction to confirm an address change is received, the step goes to step S302. When the instruction to confirm an address change is not received, the step returns to step S301. Furthermore, first address change confirmation information forming section 1103 may form first address change confirmation information based on a user's instruction.

(Step S302) First address change confirmation information forming section 1103 obtains first address information from first address information storage section 1101.

(Step S303) First address change confirmation information forming section 1103 obtains a first electronic equipment identifier from first electronic equipment identifier storage section 1102.

(Step S304) First address change confirmation information forming section 1103 forms first address change confirmation information containing the first address information obtained in step S302 and the first electronic equipment identifier obtained in step S303. Usually, first address change confirmation information forming section 1103 forms the first address change confirmation information that is a packet in which the first address information and the first electronic equipment identifier were written in payload.

(Step S305) First address change confirmation information sending section 1104 sends the first address change confirmation information formed in step S304 to information processing device 12.

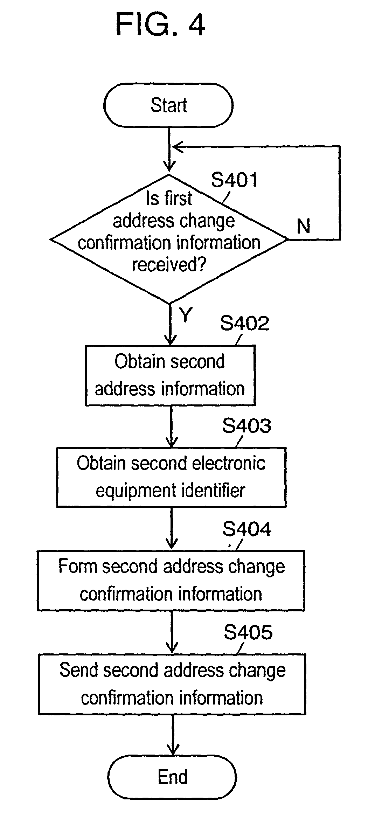

Next, an operation of information processing device 12 is described with reference to the flowchart shown in FIG. 4.

(Step S401) First address change confirmation information receiving section 1203 determines whether or not the first address change confirmation information was received. When the first address change confirmation information is received, the step goes to step S402. When the first address change confirmation information is not received, the step returns to step S401.

(Step S402) Second address change confirmation information forming section 1204 obtains second address information from second address information storage section 1201.

(Step S403) Second address change confirmation information forming section 1204 obtains a second electronic equipment identifier from electronic equipment identifier storage section 1202.

(Step S404) Second address change confirmation information forming section 1204 forms second address change confirmation information by writing the second address information obtained in step S402 and the second electronic equipment identifier obtained in step S403 in the first address change confirmation information. Usually, second address change confirmation information forming section 1204 writes the second address information and the second electronic equipment identifier in a header portion of a block.

(Step S405) Second address change confirmation information sending section 1205 sends the second address change confirmation information formed in step S404 to server device 14.

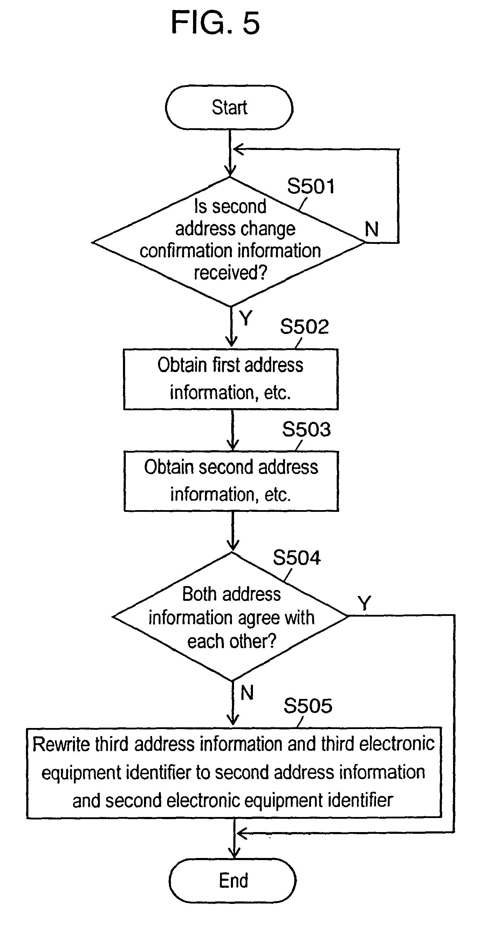

Next, an operation of server device 14 is described with reference to the flowchart shown in FIG. 5.

(Step S501) Second address change confirmation information receiving section 1402 determines whether or not the second address change confirmation information was received. When the second address change confirmation information is received, the step goes to step S502. When the second address change confirmation information is not received, the step returns to step S501.

(Step S502) Determination section 1403 takes out the first address information and the first electronic equipment information contained in the second address change confirmation information.

(Step S503) Determination section 1403 takes out the second address information and the second electronic equipment information contained in the second address change confirmation information.

(Step S504) Determination section 1403 determines whether or not the first address information and the second address information, which are contained in the second address change confirmation information, agree with each other, or/and whether or not the first electronic equipment identifier and the second electronic equipment identifier, which are contained in the second address change confirmation information, agree with each other. When they agree with each other, the processing is completed and when they do not agree with each other, the step goes to step S505. Note here that since the processing is completed when they agree with each other, in such a case, server device 14 is to abandon the received packet.

(Step S505) Electronic equipment address information updating section 1404 rewrites third address information or/and a third electronic equipment identifier of the electronic equipment address information containing third address information agreeing with the first address information contained in the second address change confirmation information and a third electronic equipment identifier agreeing with the second address information to second address information or/and a second electronic equipment identifier contained in the second address change confirmation information.

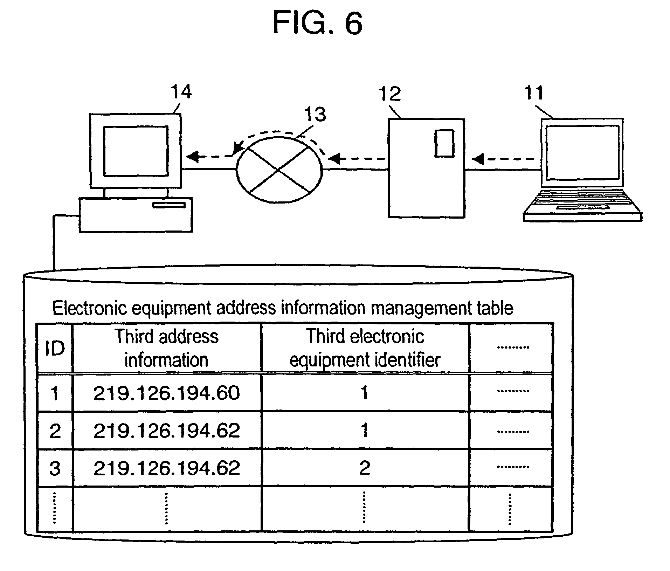

Hereinafter, a specific operation of the information processing system in the first exemplary embodiment is described. FIG. 6 is a conceptual diagram of the information processing system. In FIG. 6, electronic equipment 11 is, for example, a personal computer. Information processing device 12 is, for example, a router. Server device 14 is connected to information processing device 12 via the Internet 13. Furthermore, server device 14 holds an electronic equipment address information management table shown in FIG. 6. Electronic equipment address information management table stores one or more pieces of electronic equipment address information. Electronic equipment address information herein includes "ID," "third address information" and "third electronic equipment identifier." "ID" is an identifier for identifying the electronic equipment address information, which are data necessary for management of table. "Third address information" herein denotes a global IP address at the side of WAN of information processing device 12 (router).

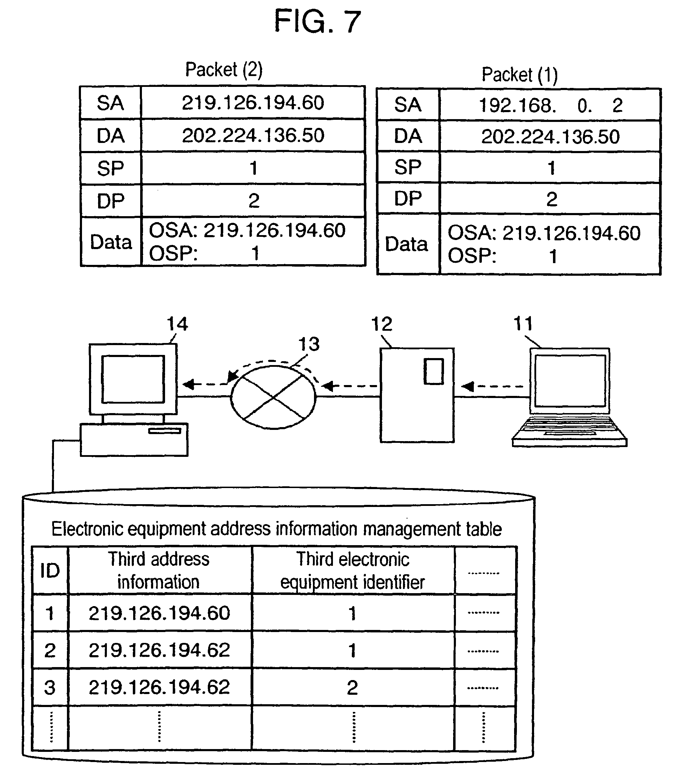

First of all, FIG. 7 is a conceptual diagram showing the information processing system showing information sent from electronic equipment 11. The information shown in FIG. 7 (packet (1) and packet (2)) is generally called a packet. The packet includes a sender's IP address (hereinafter, which is appropriately referred to as "SA"), a destination IP address (hereinafter, which is appropriately referred to as "DA"), a port of a device specified by the sender's IP address (hereinafter, which is appropriately referred to as "SP"), a port of a device specified by the destination IP address (hereinafter, which is appropriately referred to as "DP") and data (hereinafter, which is appropriately referred to as "Data"). Note here that the data are a main body portion of the information (payload) to be sent. Furthermore, "OSA" of the data is first address information and "OSP" is first electronic equipment identifier. "CDSA" and "OSP" may be old information. That is to say, "OSA" stored in electronic equipment 11 originally agrees with a global IP address held by the information processing device. However, when the global IP address held by the information processing device is changed, both information do not agree with each other. To confirm such a case, processing according to the first exemplary embodiment is carried out. Note here that "OSP" is an old port number of electronic equipment 11, and when it is not changed, it agrees with "SP."

According to FIG. 7, the first address information stored in electronic equipment 11 is "219.126.194.60" and the first electronic equipment identifier stored in electronic equipment 11 is "1." Electronic equipment 11 writes the first address information "219.126.194.60" and the first electronic equipment identifier "1" in payload as OSA and OSP, respectively. Electronic equipment 11 forms the first address change confirmation information of packet (1), and sends the first address change confirmation information to information processing device 12. "SA" of the packet (1) is a local IP address assigned to electronic equipment 11 and "DA" is a global IP address of server device 14. Electronic equipment 11 holds a global IP address of server device 14 in advance for communicating with server device 14.

Information processing device 12 stores the second address information "219.126.194.60" and the second electronic equipment identifier "1." The second address information "219.126.194.60" is a current IP address at the side of WAN of information processing device 12. Information processing device 12 receives the first address change confirmation information of packet (1), and rewrites "SA" to the second address information "219.126.194.60" and "SP" to the second electronic equipment identifier "1." Thus, packet (2) shown in FIG. 7 is formed. Packet (2) shown in FIG. 7 is second address change confirmation information. Then, information processing device 12 sends packet (2) to server device 14.

Server device 14 receives packet (2) shown in FIG. 7, compares "SA" with "OSA" of packet (2) and compares "SP" with "OSP" of packet (2). In packet (2), "SA" agrees with "OSA," and "SP" agrees with "OSP," respectively. Therefore, server device 14 abandons packet 2 without doing anything.

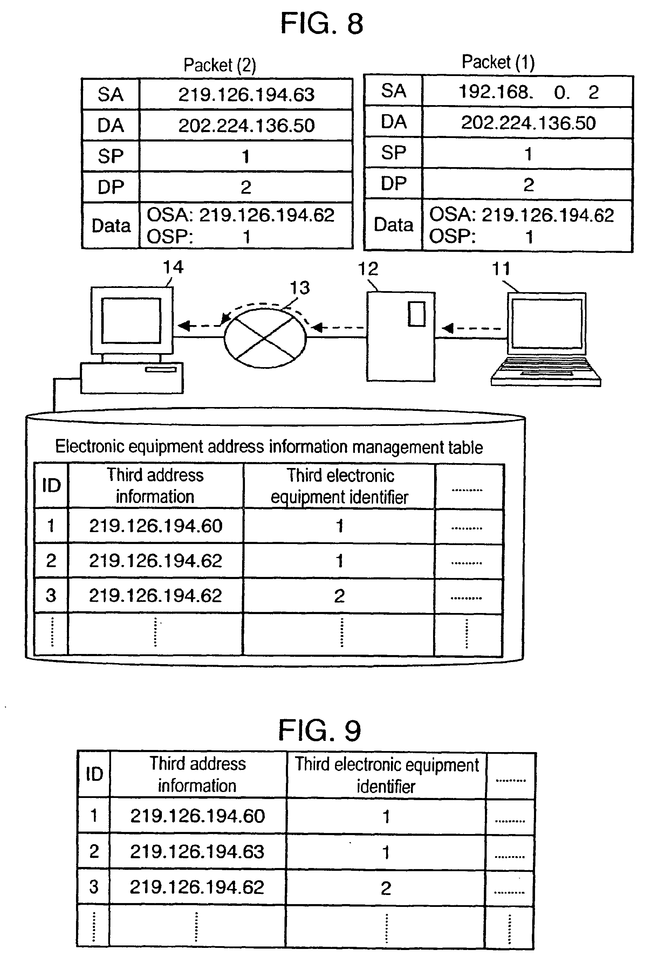

Next, information sent from electronic equipment 11 is shown in FIG. 8. According to FIG. 8, the first address information stored in electronic equipment 11 is "219.126.194.62" and the first electronic equipment identifier stored in electronic equipment 11 is "1." Then, electronic equipment 11 writes the first address information "219.126.194.62" and the first electronic equipment identifier "1" in payload as OSA and OSP, respectively. Then, electronic equipment 11 forms the first address change confirmation information of packet (1), and sends the first address change confirmation information to information processing device 12.

Next, information processing device 12 stores the second address information "219.126.194.63" and the second electronic equipment identifier "1." The second address information "219.126.194.63" is a current IP address at the side of WAN of information processing device 12. Information processing device 12 receives the first address change confirmation information of packet (1) and rewrites "SA" to the second address information "219.126.194.63" and "SP" to the second electronic equipment identifier "1." Thus, packet (2) shown in FIG. 8 is formed. Packet (2) shown in FIG. 8 is second address change confirmation information. Then, information processing device 12 sends packet (2) to server device 14.

Next, server device 14 receives packet (2) shown in FIG. 8, compares "SA" with "OSA" of packet (2), and compares "SP" with "OSP" of packet (2). In packet (2) shown in FIG. 8, "SA" and "OSA" do not agree with each other. Therefore, server device 14 searches electronic equipment address information management table containing "OSA = 219.126.194.62" and "OSP = 1" in "third address information" and "third electronic equipment identifier" respectively, and rewrites "third address information" and "third electronic equipment identifier" of the record ("ID = 2") to "SA" and "SP" of packet (2). Therefore, "third address information" of the record of "ID = 2" in the electronic equipment address information management table becomes "219.126.194.63" and "third electronic equipment identifier" of the record of "ID = 2" becomes "1." Consequently, the electronic equipment management table of server device 14 is changed as in shown in FIG. 9.

As mentioned above, according to the first exemplary embodiment, when the address with which the server device sends information to the information processing device or the electronic equipment identifier of the electronic equipment is changed, the server device can change and manage addresses or electronic equipment identifiers with light load of CPU and a small amount of communication data. That is to say, with light load of CPU and light communication load, the server device can continue to communicate with the electronic equipment normally.

Note here that in the first exemplary embodiment, the timing at which the electronic equipment sends first address change confirmation information was not described in detail. However, it is preferable that the electronic equipment sends first address change confirmation information to the information processing device regularly. Because it is not preferable that when a state in which the IP address, etc. at the side of WAN of the information processing device managed by the server device continues for a long time, a state in which the electronic equipment cannot be accessed from the outside continues for a long time. "Regularly" means, for example, every three minutes. The same is true in the other exemplary embodiments. Furthermore, even when the above-mentioned address change confirmation information (packet) is sent, for example, every three minutes, data amount is small and communication load is also small.

Furthermore, needless to say, a structure of the electronic equipment address information of the server device mentioned in the first exemplary embodiment is not limited to the structure shown in FIG. 6. The electronic equipment address information may include, for example, electronic equipment specific information (MAC address, etc.) for identifying the electronic equipment. The same is true in the other exemplary embodiments.

Furthermore, the operations of the electronic equipment, the information processing device and the server device, which were described in the first exemplary embodiment, may be realized by software, and the software may be disposed on the server, for example, so to be distributed by software download. Furthermore, the software may be recorded in a recording medium such as CD-ROM so as to be provided. Various devices can be realized by software, etc., which can be applied to the other exemplary embodiments.

Note here that a program in which the operation of the electronic equipment in the first exemplary embodiment was realized is as follows. The program allows a computer to execute a step of obtaining first address information stored in advance; a step of obtaining first electronic equipment identifier stored in advance; a first address change confirmation information forming step of forming first address change confirmation information containing the first address information and the first electronic equipment identifier; and a first address change confirmation information sending step of sending the first address change confirmation information to the information processing device.

### (SECOND EXEMPLARY EMBODIMENT)

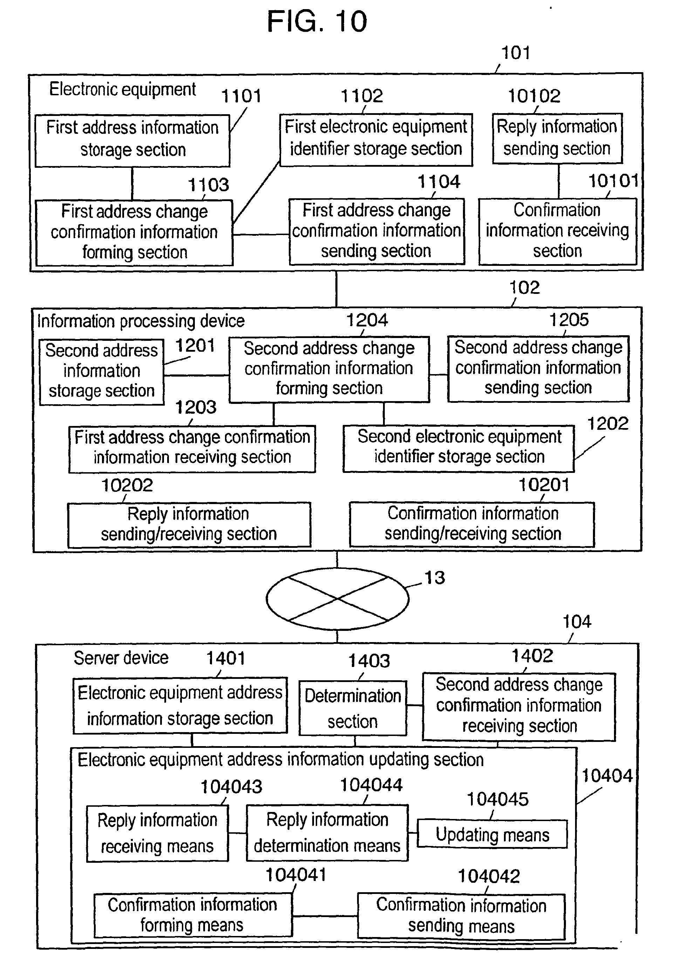

FIG. 10 is a block diagram showing an information processing system according to the second exemplary embodiment. The information processing system includes electronic equipment 101, information processing device 102, the Internet 13 and server device 104.

Electronic equipment 101 includes first address information storage section 1101, first electronic equipment identifier storage section 1102, first address change confirmation information forming section 1103, first address change confirmation information sending section 1104, confirmation information receiving section 10101 and send back information sending section 10102.

Information processing device 102 includes second address information storage section 1201, second electronic equipment identifier storage section 1202, first address change confirmation information receiving section 1203, second address change confirmation information forming section 1204, second address change confirmation information sending section 1205, confirmation information sending/receiving section 10201 and reply information sending/receiving section 10202.

Server device 104 includes electronic equipment address information storage section 1401, second address change confirmation information receiving section 1402, determination section 1403 and electronic equipment address information updating section 10404. Electronic equipment address information updating section 10404 includes confirmation information forming means 104041, confirmation information sending means 104042, reply information receiving means 104043, reply information determination means 104044 and updating means 104045.

Confirmation information receiving section 10101 receives confirmation information from information processing device 102. The confirmation information is information for confirming whether or not address information (an IP address at the side of WAN, etc.) of information processing device 102 actually changes and a data structure thereof is not particularly limited. Examples of the confirmation information are shown below specifically. Confirmation information receiving section 10101 can be realized by a wire or wireless communication means.

Send back information sending section 10102 sends reply information corresponding to the confirmation information to information processing device 102. The reply information is information with which server device 104 confirms whether or not the change in the address information (an IP address at the side of WAN, etc.) of information processing device 102 is impersonated by a malicious user, etc. and a data structure of thereof is not particularly limited. Examples of the reply information are shown below specifically. Send back information sending section 10102 can be realized by a wire or wireless communication means.

Confirmation information sending/receiving section 10201 receives confirmation information from server device 104 and sends the confirmation information to electronic equipment 101. Confirmation information sending/receiving section 10201 can be realized by a wire or wireless communication means.

Reply information sending/receiving section 10202 receives reply information from electronic equipment 101 and sends the reply information to server device 104. Reply information sending/receiving section 10202 can be realized by a wire or wireless communication means.

Confirmation information forming means 104041 forms confirmation information. A data structure of the confirmation information is not particularly limited. The confirmation information usually includes new address information, which was thought to be changed, of the information processing device or electronic equipment identifier of the electronic equipment. Forming includes also a processing of reading out information stored in advance. Confirmation information forming means 104041 can be usually realized by MPU, a memory, and the like. A processing procedure in which confirmation information forming means 104041 forms confirmation information can be realized usually by software, and the software is recorded in a recording medium such as a hard disk. However, it may be realized by hardware (leased line).

Confirmation information sending means 104042 sends the confirmation information formed by confirmation information forming means 104041 to information processing device 102. Confirmation information sending means 104042 can be realized by a wire or wireless communication means.

Reply information receiving means 104043 receives reply information corresponding to the sending of the confirmation information from information processing device 102. Reply information receiving means 104043 can be realized by a wire or wireless communication means.

Reply information determination means 104044 determines whether or not the reply information received by reply information receiving means 104043 satisfies a certain condition. Determination algorithm of reply information determination means 104044 is not particularly limited. Determination algorithm of reply information determination means 104044 is described below specifically. Reply information determination means 104044 can be usually realized by MPU, a memory, and the like. A processing procedure in which reply information determination means 104044 makes a determination can be realized usually by software, and the software is recorded in a recording medium such as a hard disk. However, it may be realized by hardware (leased line).

When reply information determination means 104044 determines that a certain condition is satisfied, updating means 104045 rewrites third address information or/and a third electronic equipment identifier of the electronic equipment address information containing third address information that is the same as the first address information contained in second address change confirmation information and a third electronic equipment identifier that is the same as the first electronic equipment identifier contained in the second address change confirmation information to second address information or/and a second electronic equipment identifier contained in the second address change confirmation information. Updating means 104045 can be usually realized by MPU, a memory, and the like. The processing procedure of updating means 104045 can be realized usually by software, and the software is recorded in a recording medium such as a hard disk. However, it may be realized by hardware (leased line).

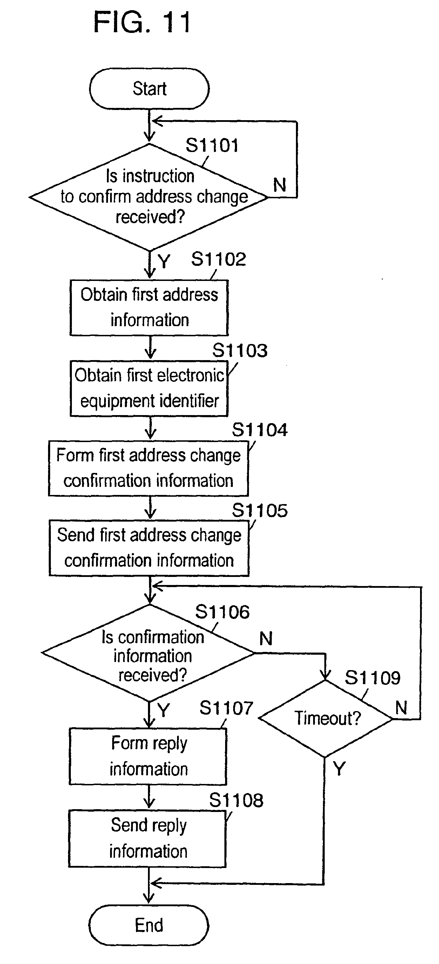

Hereinafter, an operation of the information processing system is described. Firstly, an operation of electronic equipment 101 is described with reference to the flowchart shown in FIG. 11.

(Step S1101) First address change confirmation information forming section 1103 determines whether or not an instruction to confirm an address change was received. When the instruction to confirm an address change is received, the step goes to step S1102, and when the instruction to confirm an address change is not received, the step returns to S1101.

(Step S1102) First address change confirmation information forming section 1103 obtains first address information from first address information storage section 1101.

(Step S1103) First address change confirmation information forming section 1103 obtains a first electronic equipment identifier from first electronic equipment identifier storage section 1102.

(Step S1104) First address change confirmation information forming section 1103 forms first address change confirmation information containing the first address information obtained in step S1102 and the first electronic equipment identifier obtained in step S1103.

(Step S1105) First address change confirmation information sending section 1104 sends the first address change confirmation information formed in step S1104 to information processing device 102.

(Step S1106) Confirmation information receiving section 10101 determines whether or not confirmation information was received from information processing device 102. When the confirmation information is received, the step goes to step S1107, and when the confirmation information is not received, the step skips to step S1109.

(Step S1107) Send back information sending section 10102 forms send back information.

(Step S1108) Send back information sending section 10102 sends the send back information formed in step S1107 to information processing device 102.

(Step S1109) It is determined whether or not time is out. When it is determined that time is out, the processing is completed, and when it is determined that time is not out, the step returns to step S1106. Note here that timeout means that a certain time has passed since the first address change confirmation information was sent. Electronic equipment 101 holds a timer. The case of timeout is usually a case where no change occurs in the address information.

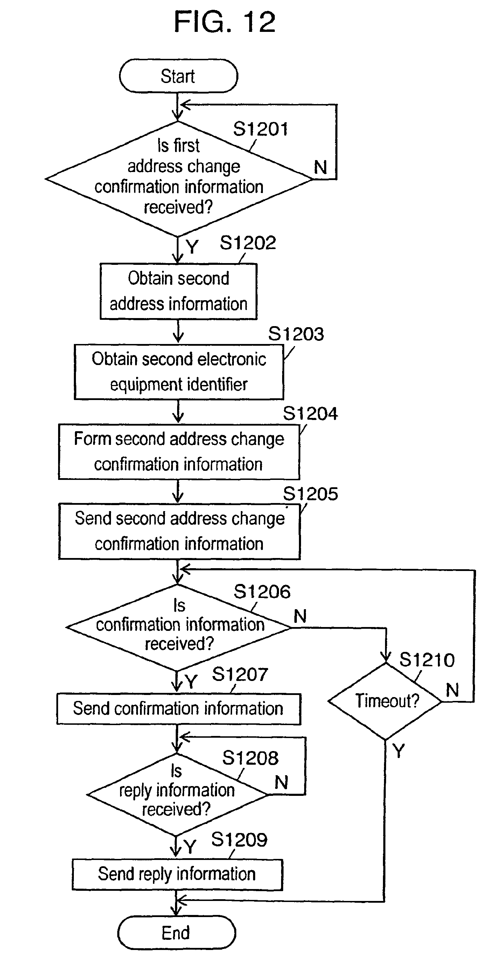

Next, an operation of information processing device 102 is described with reference to the flowchart shown in FIG. 12.

(Step S1201) First address change confirmation information forming section 1203 determines whether or not first address change confirmation information was received. When the first address change confirmation information is received, the step goes to step S1202, and when the first address change confirmation information is not received, the step returns to S1201.

(Step S1202) Second address change confirmation information forming section 1204 obtains second address information from second address information storage section 1201.

(Step S1203) Second address change confirmation information forming section 1204 obtains a second electronic equipment identifier from second electronic equipment identifier storage section 1202.

(Step S1204) Second address change confirmation information forming section 1204 forms second address change confirmation information by writing the second address information obtained in step S1202 and the second electronic equipment identifier obtained in step S1203 in the first address change confirmation information.

(Step S1205) Second address change confirmation information sending section 1205 sends the second address change confirmation information formed in step S1204 to server device 14.

(Step S1206) Confirmation information sending/receiving section 10201 determines whether or not confirmation information was received from server device 104. When the confirmation information is received, the step goes to step S1207, and when the confirmation information is not received, the step skips to step S1210.

(Step S1207) Confirmation information sending/receiving section 10201 sends the confirmation information received in step S1206 to electronic equipment 101.

(Step S1208) Reply information sending/receiving section 10202 determines whether or not reply information was received from electronic equipment 101. When the reply information is received, the step goes to step S1209, and when the reply information is not received, the step returns to step S1208.

(Step S1209) Reply information sending/receiving section 10202 sends the reply information received in step S1208 to server device 104.

(Step S1210) It is determined whether or not time is out. When it is determined that time is out, the processing is completed, and when it is determined that time is not out, the step returns to step S1206.

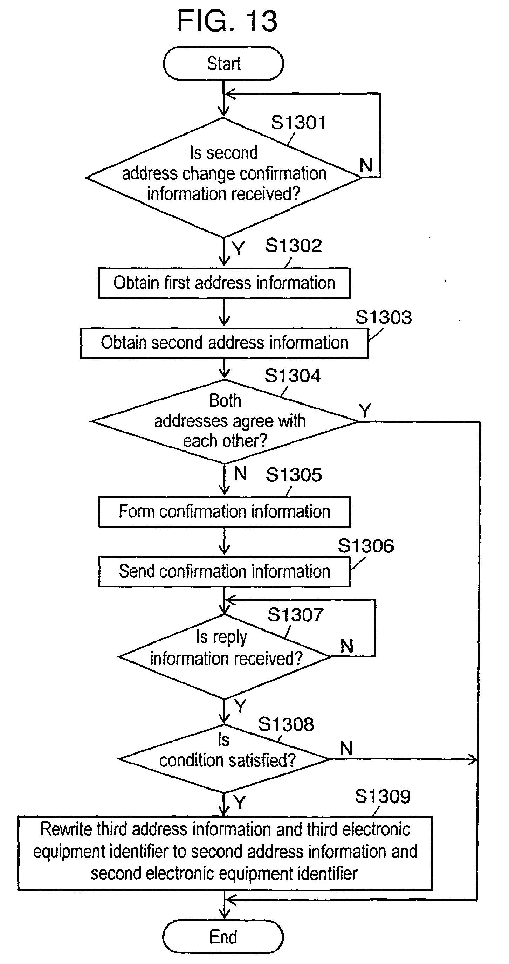

Next, an operation of server device 104 is described with reference to the flowchart shown in FIG. 13.

(Step S1301) Second address change confirmation information receiving section 1402 determines whether or not second address change confirmation information was received. When the second address change confirmation information is received, the step goes to step S1302, and when the second address change confirmation information is not received, the step returns to step S1301.

(Step S1302) Determination section 1403 takes out first address information contained in the second address change confirmation information.

(Step S1303) Determination section 1403 takes out second address information contained in the second address change confirmation information.

(Step S1304) Determination section 1403 compares the first address information with the second address information so as to determine whether or not they agree with each other. When they agree with each other, the processing is completed, and when they do not agree with each other, the step goes to step S1305. Note here that since the processing is completed when they agree with each other, in such a case, server device 14 is to abandon the received packets.

(Step S1305) Confirmation information forming means 104041 forms confirmation information.

(Step S1306) Confirmation information sending means 104042 sends the confirmation information formed in step S1305 to information processing device 102.

(Step S1307) Reply information receiving means 104043 determines whether or not reply information was received. When the reply information is received, the step goes to step S1308, and when the reply information is not received, the step returns to step S1307.

(Step S1308) Reply information determination means 104044 determines whether or not the reply information received by reply information receiving means 104043 satisfies a certain condition. When the certain condition is satisfied, the step goes to step S1309, and when the certain condition is not satisfied, the processing is completed.

(Step S1309) Updating means 104045 rewrites third address information or/and a third electronic equipment identifier of electronic equipment address information containing third address information agreeing with the first address information contained in the second address change confirmation information and a third electronic equipment identifier agreeing with the first electronic equipment identifier contained in the second address change confirmation information to second address information or/and a second electronic equipment identifier contained in the second address change confirmation information.

Note here that in the flowchart shown in FIG. 13, determination section 1403 compared only the first address information with the second address information so as to determine whether or not they agree with each other. However, determination section 1403 may determine whether or not the first address information and the second address information, which are contained in the second address change confirmation information, agree with each other, and whether or not the first electronic equipment identifier and the second electronic equipment identifier, which are contained in the second address change confirmation information, agree with each other.

Hereinafter, a specific operation of the information processing system in the second exemplary embodiment is described. The conceptual diagram of this information processing system is the same as that shown in FIG. 6. Furthermore, the server device stores the electronic equipment address information management table shown in FIG. 6. Furthermore, the electronic equipment is a personal computer, and the information processing device is a router.

In the second exemplary embodiment, when the server device determines, based on the second address change confirmation information sent from the router, that the address information of the router (for example, an IP address at the side of WAN) changes, for confirmation thereof, it sends confirmation information to the router. Then, the confirmation information is sent to the electronic equipment via the router. Then, reply information is formed in the electronic equipment and sent to the server device via the router. At this time, when the reply information is based on a certain condition, or when the reply information is received, the server device updates the managed electronic equipment address information management table.

Herein, the processing before the server device determines that the address information of the router changes and the processing in which the server device updates the electronic equipment address information management table are the same as described in the first exemplary embodiment. Herein, the processing after it is determined that the address information of the router changes and before confirmation information is sent, reply information is received and it is determined that the electronic equipment address information management table is updated is described specifically.

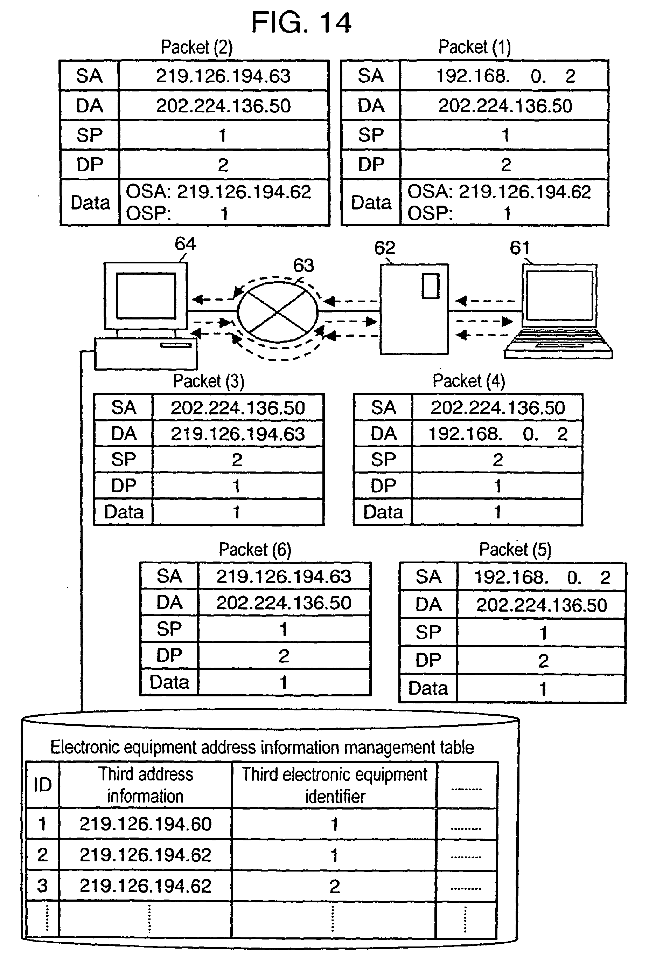

Firstly, a first example is described. Now, it is assumed that packet (1) shown in FIG. 14 (same as packet (1) shown in FIG. 8) is sent from the electronic equipment to the router and that the router forms packet (2) shown in FIG. 14 (same as packet (2) shown in FIG. 8). Then, the router sends packet (2) to the server device. Next, the server device determines that "third address information" and "third electronic equipment identifier" of the record of "ID = 2" in the electronic equipment address information management table may be updated according to packet (2).

Next, the server device forms, for example, packet (3) shown in FIG. 14. Packet (3) is confirmation information. That is to say, the server device assigns the changed IP address of the router, "219.126.194.63," to "DA." Furthermore, the server device assigns the changed port number of the electronic equipment, "1," to "DP." Furthermore, the server device assigns "1" to "Data." When the server device assigns "1" to "Data" and "1" is returned as it is, the server device determines that the changed IP address of the router, "219.126.194.63" and the changed port number of the electronic equipment, "1," are correct information. That is to say, it is determined that the received packet (2) is not impersonated information but correct information. That is to say, herein, the reply information determination means of the server device determines that a certain condition is satisfied when data of the body part (payload) of the sent confirmation information agree with data of the body part (payload) of the received reply information. Note here that the value "1" of the above-mentioned "Data" is information showing that the address changes. Furthermore, as the value of the above-mentioned "Data," the changed IP address of the router, "219.126.194.63," and the changed port number of the electronic equipment, "1," may be assigned. In such a case, it is preferable that the electronic equipment reads out the changed IP address, "219.126.194.63" and the changed port number, "1" and records them in the electronic equipment. Furthermore, needless to say, as the above-mentioned "Data," a character string such as "confirmation information" may be assigned.

Next, the server device sends packet (3) shown in FIG. 14 to the router. The router receives packet (3), forms packet (4) and sends packet (4) to the electronic equipment. Next, the electronic equipment receives packet (4) (confirmation information) and forms packet (5) (reply information). Herein, the electronic equipment uses "SA", "DA", "SP" and "DP" as the reply information same as in packet (1), and "Data" of the reply information uses "Data" of the confirmation information. Thus, reply information (packet (5)) is formed. Then, the electronic equipment sends packet (5) to the router. That is to say, the electronic equipment knows that "Data" contained in the received confirmation information is used for "Data" of the reply information.

Next, the router receives packet (5), forms packet (6) and sends packet (6) (reply information) to the server device. The server device receives packet (6) (reply information) and checks whether or not the value of "Data" of packet (6) is "1." Since the value of "Data" of packet (6) (reply information) is "1," it is determined that packet (2) is a right packet (second address change confirmation information), and the server device rewrites "third address information" and "third electronic equipment identifier" of the record of "ID = 2" of the stored electronic equipment address information management table to "SA" and "SP" of packet (2). As mentioned above, "third address information" of the record of "ID = 2" of the electronic equipment address information management table becomes "219.126.194.63" and "third electronic equipment identifier" of the record of "ID = 2" becomes "1" (see FIG. 9).

Next, a second example is described. Now, similar to the first example, it is assumed that packet (1) shown in FIG. 14 was sent from the electronic equipment to the router and that the server device received packet (2) shown in FIG. 14. Then, the server device determines that "third address information" and "third electronic equipment identifier" of the record of "ID = 2" in the electronic equipment address information management table may be updated according to packet (2).

Next, the server device sends, for example, packet (3) shown in FIG. 14. Then, the server device checks whether or not reply information is received from the router in a predetermined time. When reply information is received from the router in a predetermined time, the server device determines that packet (2) is a right packet (second address change confirmation information). Then, as mentioned above, the server device rewrites "third address information" of the record of "ID = 2" in the electronic equipment address information management table to "219.126.194.63" and "third electronic equipment identifier" of the record of "ID = 2" to "1."

Next, a third example is described. Now, similar to the first example, it is assumed that packet (1) shown in FIG. 14 was sent from the electronic equipment to the router and that the server device received packet (2) shown in FIG. 14. Then, the server device determines that "third address information" and "third electronic equipment identifier" of the record of "ID = 2" in the electronic equipment address information management table may be updated according to packet (2).

The server device sends, for example, packet (3) shown in FIG. 14. Then, the electronic equipment receives packet (4) shown in FIG. 14. Then, the electronic equipment encrypts data of packet (4) by algorithm such as SSL. Then, the electronic equipment sends the encrypted information to the server device via the router. The server device receives and decrypts the encrypted information. Then, the server device determines that the packet (2) is a right packet (second address change confirmation information) when the decrypted information (reply information) satisfies a certain condition. Then, as mentioned above, the server device rewrites "third address information" of the record of "ID = 2" in the electronic equipment address information management table to "219.126.194.63" and "third electronic equipment identifier" of the record of "ID = 2" to "1."

As mentioned above, according to the second exemplary embodiment, when it is determined that address information with which the server device sends information to the information processing device or an electronic equipment identifier of the electronic equipment changes, the server device confirms whether or not the determination is right (whether or not the packet is impersonated by a malicious user, etc.). Thereby, the address information is not unjustly changed by a cracker, etc., so that the reliability is increased. Furthermore, by encrypting reply information by algorithm such as SSL (Secure socket layer), the reliability is further increased.

Note here that in the second exemplary embodiment, the server device confirmed whether or not the received second address change confirmation information was right by various algorithm, however, the confirmation is not particularly limited to the above-mentioned examples. For example, in the first example, it is assumed that the server device and the electronic equipment knew the number obtained by adding "1" to "Data" of confirmation information became "Data" of reply information. In such a case, the electronic equipment forms reply information by rewriting "Data" to "2" when confirmation information having "Data" of "1" is received. The server device receiving such reply information determines that the second address change confirmation information was right and may rewrite address information, etc. as mentioned above. Furthermore, as the value of "Data" of the confirmation information, the changed IP address of the router, "219.126.194.63," and the changed port number of the electronic equipment, "1" are assigned. When the information in "Data" inside the packet replied from the electronic equipment and "SA" and "SP" inside the packet agree with each other, the server device determines that the second address change confirmation information was right and may rewrite the address information, etc. as mentioned above. That is to say, the server device sends the confirmation information to the electronic equipment via the information processing device, receives reply information corresponding to the sending of the confirmation information and may determine the rightness of the received second address change confirmation information based on the reply information. The term "based on the reply information" also includes the determination that the reply information is right without checking the content of the reply information when the reply information is received as mentioned above.

Furthermore, a program in which the operation of the electronic equipment in the second exemplary embodiment was realized by software is as follows. The program allows a computer to execute a step of obtaining first address information stored in advance; a step of obtaining a first electronic equipment identifier stored in advance; a first address change confirmation information forming step of forming first address change confirmation information containing the first address information and the first electronic equipment identifier; a first address change confirmation information sending step of sending the first address change confirmation information to the information processing device; a confirmation information receiving step of receiving the confirmation information from the information processing device; and a reply information sending step of sending reply information corresponding to the confirmation information to the information processing device.

### (THIRD EXEMPLARY EMBODIMENT)

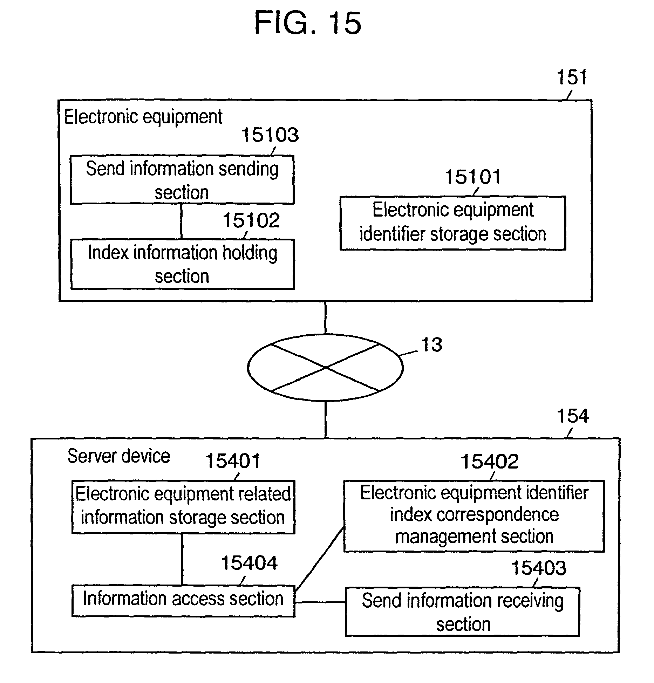

FIG. 15 is a block diagram showing an information processing system according to the third exemplary embodiment. The information processing system includes electronic equipment 151, the Internet 13 and server device 154. Electronic equipment 151 includes electronic equipment identifier storage section 15101, index information holding section 15102 and send information sending section 15103. Server device 154 includes electronic equipment related information storage section 15401, electronic equipment identifier index correspondence management section 15402, send information receiving section 15403 and information access section 15404.

Electronic equipment identifier storage section 15101 stores an electronic equipment identifier that is information for identifying electronic equipment. Examples of the electronic equipment identifiers include a MAC address or an IP address of the electronic equipment, and the like. However, an electronic equipment identifier may be any information as long as it is information unique to electronic equipment. This electronic equipment identifier is information that is not desired to be known to third parties. For example, when a MAC address or an IP address is known to malicious third parties, electronic equipment may be accessed freely. Note here that a data structure of the electronic equipment identifier is not particularly limited. It is preferable that electronic equipment identifier storage section 15101 is realized by a nonvolatile recording medium. However, it may be realized by a volatile recording medium.

Index information holding section 15102 holds index information. Index information is information used by server device 154 for identifying electronic equipment. A data structure of the index information is not particularly limited. When server device 154 has a table in which electronic equipment identifier is stored, the index information is, for example, address information of the table. It is preferable that index information holding section 15102 is realized by a nonvolatile recording medium. However, it may be realized a volatile recording medium.

Send information sending section 15103 obtains index information from index information holding section 15102 and sends the send information containing the index information to the server device 154. A data structure of the send information is not particularly limited. Send information sending section 15103 can be realized by a wire or wireless communication means.

Electronic equipment related information storage section 15401 stores electronic equipment related information that is information related to electronic equipment. The electronic equipment related information is one or more pieces of information related to electronic equipment. Examples of the electronic equipment related information include information (record including an IP address, a port number, and the like) for accessing one or more electronic equipment. Electronic equipment related information storage section 15401 can be realized by a nonvolatile recording medium or a volatile recording medium.

Electronic equipment identifier index correspondence management section 15402 stores an electronic equipment identifier for accessing electronic equipment related information with corresponding to the index information. "Corresponding to" just means that the electronic equipment identifier can be obtained from the index information. That is to say, there may be a record containing index information and an electronic equipment identifier, or index information may be linked to an electronic equipment identifier, or an electronic equipment identifier may be stored in an address shown by index information. Electronic equipment identifier index correspondence management section 15402 can be realized by a nonvolatile recording medium or a volatile recording medium.

Send information receiving section 15403 receives send information containing index information from electronic equipment 151. Send information receiving section 15403 can be realized by a wire or wireless communication means.

Information access section 15404 obtains an electronic equipment identifier based on the index information contained in send information, and accesses electronic equipment related information based on the electronic equipment identifier. "Accessing" refers to searching, updating, deleting, and the like. Information access section 15404 can be usually realized by MPU, a memory, and the like. A processing procedure of information access section 15404 is usually realized by software. The software is usually recorded in a recording medium such as a hard disk. However, it may be realized by hardware (leased line).

Hereinafter, an operation of the information processing system is described. Firstly, an operation of electronic equipment 151 is described. Electronic equipment 151 obtains index information by some trigger so as to form send information containing the index information and sends it to server device 154. The timing at which electronic equipment 151 sends the send information to server device 154 is not particularly limited.

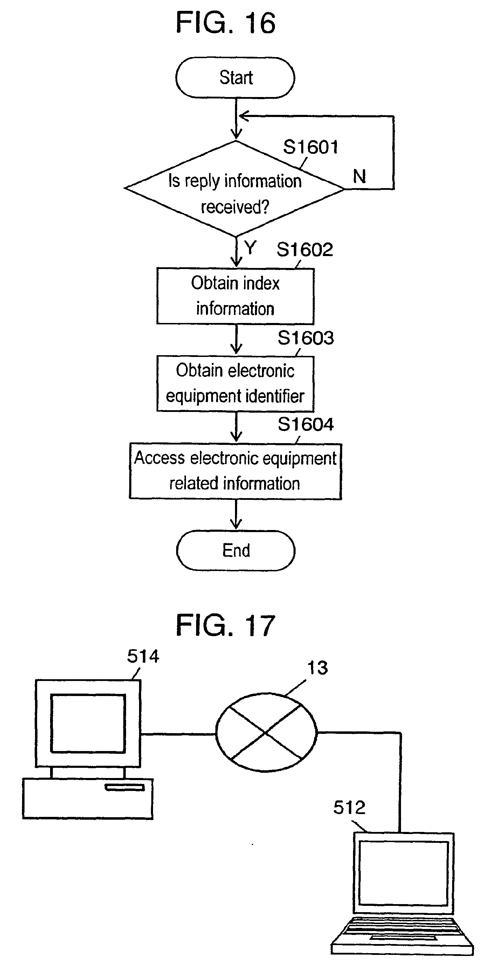

Next, an operation of server device 154 is described with reference to the flowchart shown in FIG. 16.

(Step S1601) It is determined whether or not send information receiving section 15403 received send information from electronic equipment 151. When the send information is received, the step goes to step S1602, and when the send information is not received, the step returns to step S1601.

(Step S1602) Information access section 15404 obtains index information from the send information received in step S1601. Note here that the send information may agree with the index information. In such a case, this step may not be necessary.

(Step S1603) Information access section 15404 obtains an electronic equipment identifier from electronic equipment identifier index correspondence management section 15402 based on the index information obtained in step S1602.

(Step S1604) Information access section 15404 accesses electronic equipment related information of electronic equipment related information storage section 15401 based on the electronic equipment identifier obtained in step S1603.

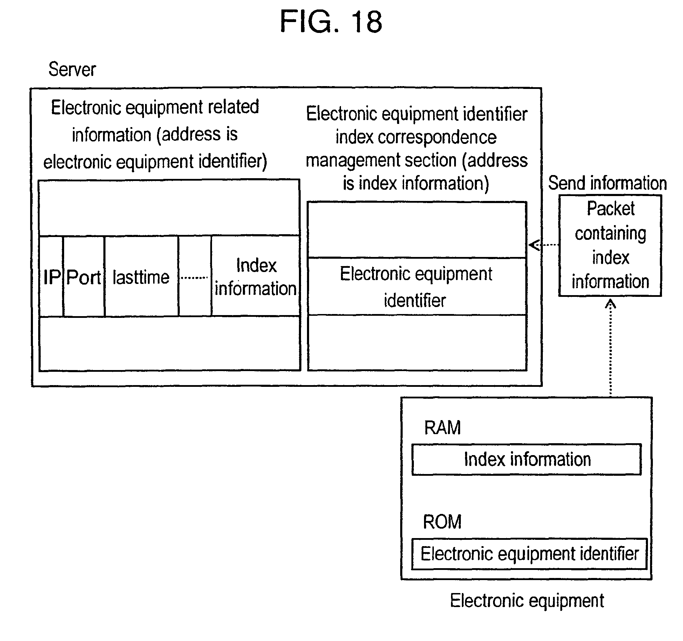

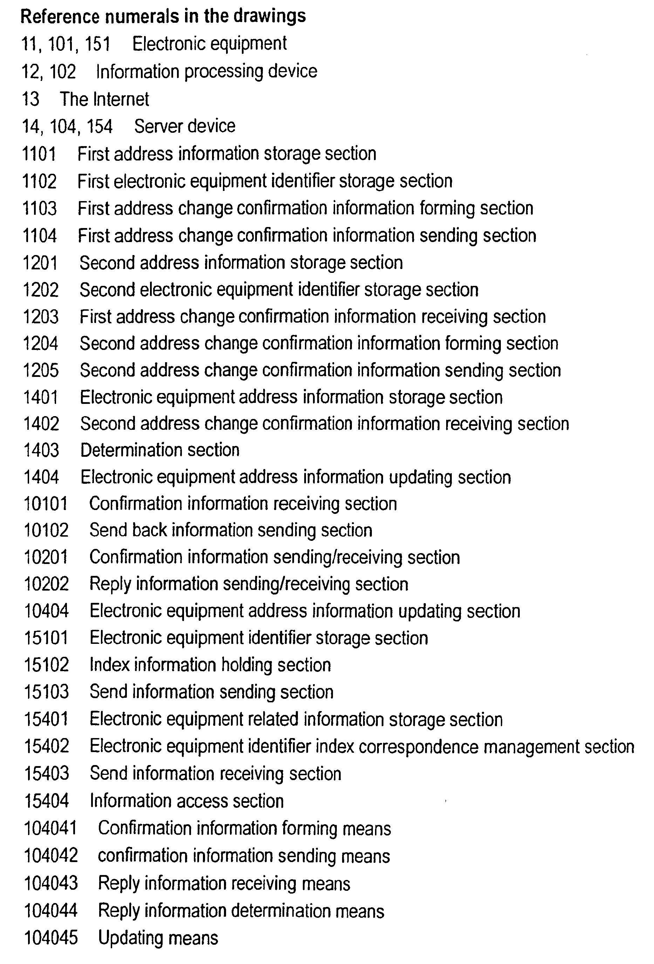

Hereinafter, a specific operation of the information processing system in the third exemplary embodiment is described. FIG. 17 is a conceptual diagram of the information processing system. Electronic equipment and a server device are connected to each other via the Internet. Then, information stored in the electronic equipment and the server device and sent/received information are described with reference to FIG. 18.

In FIG. 18, an electronic equipment identifier is stored in ROM of the electronic equipment, and index information is stored in RAM of the electronic equipment. Furthermore, the server device holds electronic equipment identifier index correspondence management section shown in FIG. 18. In this electronic equipment identifier index correspondence management section, the index information shows an address at which the value of the electronic equipment identifier exists. Furthermore, the server device holds the electronic equipment related information storage section shown in FIG. 18. The electronic equipment related information storage section holds one or more pieces of electronic equipment related information. The value of electronic equipment identifier shows an address at which the electronic equipment related information in the electronic equipment related information storage section exists. Furthermore, the electronic equipment related information includes, for example, "IP," "Port," "lasttime" and "index information." "IP" means an IP address with which the server device accesses the electronic equipment. IP address is, for example, an IP address at the side of WAN of a router (not shown) between the electronic equipment and the server device. "Port" is a port number with which the electronic equipment is connected to the router. "Lasttime" means the last time when the electronic equipment related information is rewritten.

In the state mentioned above, the electronic equipment forms packet (send information) containing index information and sends it to the server device. Next, the server device receives send information. Then, the server device obtains index information from the send information and obtains an electronic equipment identifier having the value of the index information as an address from the electronic equipment identifier index correspondence management section. Then, the server device accesses the electronic equipment related information which exists at an address of the value of the electronic equipment identifier. As mentioned above, the server device can access the electronic equipment related information by using the index information.

As mentioned above, according to the third exemplary embodiment, without using an electronic equipment identifier, by using index information, it is possible to access unique information of the electronic equipment managed by the server device. Therefore, an electronic equipment identifier is not stolen when information is sent from the electronic equipment to the server device, so that the security can be assured. Electronic equipment identifier is usually information for accessing the electronic equipment. When such information is stolen, the electronic equipment may be attacked variously from third parties.

Furthermore, according to the third exemplary embodiment, the significance of accessing the electronic equipment related information in the server device was not described in detail. However, for example, in the processing in the first exemplary embodiment or second exemplary embodiment, the access method of the server device using the index information in this exemplary embodiment may be used.

The information processing system used for the first exemplary embodiment is as follows: an information processing system including: electronic equipment; an information processing device; and a server device, the electronic equipment including a first address information storage section storing first address information showing an address with which the server device sends information to the information processing device, a first electronic equipment identifier storage section storing a first electronic equipment identifier that is information with which the information processing device sends information to the electronic equipment, an index information holding section holding index information, a first address change confirmation information forming section for obtaining first address information from the first address information storage section, obtaining a first electronic equipment identifier from the first electronic equipment identifier storage section, obtaining index information from the index information holding section and forming a first address change confirmation information containing the first address information, the first electronic equipment identifier and the index information, and a first address change confirmation information sending section for sending the first address change confirmation information to the information processing device; the information processing device including a second address information storage section storing second address information showing an address with which the server device sends information to the information processing device, a second electronic equipment identifier storage section storing a second electronic equipment identifier that is information with which the information processing device sends information to the electronic equipment, a first address change confirmation information receiving section for receiving the first address change confirmation information, a second address change confirmation information forming section for obtaining second address information from the second address information storage section, obtaining a second electronic equipment identifier from the second electronic equipment identifier storage section and forming second address change confirmation information by writing the second address information and the second electronic equipment identifier in the first address change confirmation information, and a second address change confirmation information sending section for sending the second address change confirmation information to the server device; and the server device including an electronic equipment address information storage section storing one or more pieces of electronic equipment address information containing third address information and a third electronic equipment identifier with corresponding to the electronic equipment identifier, an electronic equipment identifier index correspondence management section storing an electronic equipment identifier for accessing the electronic equipment address information with corresponding to the index information, a second address change confirmation information receiving section for receiving the second address change confirmation information, a determination section for determining whether or not first address information and second address information, which are contained in the second address change confirmation information, agree with each other or/and whether or not a first electronic equipment identifier and a second electronic equipment identifier, which are contained in the second address change confirmation information, agree with each other, and an electronic equipment address information updating section for obtaining an electronic equipment identifier from the index information, obtaining the electronic equipment address information based on the electronic equipment identifier, rewriting third address information or/and a third electronic equipment identifier of electronic equipment address information containing third address information agreeing with the first address information contained in the second address change confirmation information and a third electronic equipment identifier agreeing with the first electronic equipment identifier contained in the second address change confirmation information to second address information or/and a second electronic equipment identifier contained in the second address change confirmation information when the determination section determines that the first address information and the second address information do not agree with each other or that the first electronic equipment identifier and the second electronic equipment identifier do not agree with each other.

Furthermore, the information processing system used for the second exemplary embodiment is as follows. That is to say, in the above-mentioned information processing system, the electronic equipment further includes a confirmation information receiving section for receiving the confirmation information from the information processing device, and a send back information sending section for sending reply information corresponding to the confirmation information to the information processing device; and the information processing device further includes a confirmation information sending/receiving section for receiving the confirmation information from the server device and sending the confirmation information to the electronic equipment, and a reply information sending/receiving section for receiving the reply information from the electronic equipment and sending the reply information to the server device; and when the determination section of the server device determines that the first address information and the second address information do not agree with each other or that the first electronic equipment identifier and the second electronic equipment identifier do not agree with each other, the electronic equipment address information updating section of the server device obtains an electronic equipment identifier from the index information, obtains the electronic equipment address information based on the electronic equipment identifier, rewrites third address information or/and a third electronic equipment identifier of electronic equipment address information containing third address information agreeing with the first address information contained in the second address change confirmation information and a third electronic equipment identifier agreeing with the first electronic equipment identifier contained in the second address change confirmation information to second address information or/and a second electronic equipment identifier contained in the second address change confirmation information.

Furthermore, in the exemplary embodiments, the server device may notify the index information to the electronic equipment and the electronic equipment may accumulate the index information. Therefore, it is preferable that a region in which the electronic equipment stores the index information is re-writable recording medium such as RAM.

Furthermore, in the exemplary embodiments, it is preferable that the server device encrypts the index information and then notifies it to electronic equipment. It is advantageous because when a malicious third party obtains the index information, the malicious third party can access the electronic equipment related information of the server device.

Furthermore, in the exemplary embodiments, the index information should be changed regularly. It is because a high security is further achieved. In such a case, it is intended that the server device notifies the index information to the electronic equipment regularly.

Furthermore, a program of realizing an operation of the electronic equipment by software in the exemplary embodiments is as follows. The program allows a computer to execute a step of obtaining index information held in advance, a step of forming send information containing the index information, and a step of sending the send information to the server device.

As mentioned above, according to the present invention, when information for communication with respect to the electronic equipment managed by the server device is kept up to date, load can be reduced.

### INDUSTRIAL APPLICABILITY

The present invention relates to an information processing system etc. in which electronic equipment and a server device communicate with each other. When information for communication with respect to the electronic equipment managed by the server device is kept up to date, load can be reduced.

## Claims

1. An information processing system comprising electronic equipment (151) and a server device (154),
the electronic equipment comprising:
an index information holding section (15102) adapted to hold index information, that is information for obtaining an electronic equipment identifier and shows an address which the electronic equipment identifier exists in the server device; and
a send information sending section (15103) adapted to obtain index information from the index information holding section and to send send information, containing the index information, to the server device, and
the server device comprising:
an electronic equipment related information storage section (15401) adapted to store one or more pieces of electronic equipment related information for accessing the electronic equipment;
an electronic equipment identifier index correspondence management section (15402) adapted to store an electronic equipment identifier corresponding to the index information the electronic equipment identifier showing an address at which the electronic equipment related information exists in the electric equipment related information storage section;
a send information receiving section (15403) adapted to receive the send information from the electronic equipment;
an information accessing section (15404) adapted to obtain the electronic equipment identifier based on the index information contained in the send information received by the send information receiving section, and
wherein the information accessing section is further adapted to access the electronic equipment related information based on the obtained electronic equipment identifier, the service device using the electronic equipment related information to access the electronic equipment.

2. A server device (154) comprising:
an electronic equipment related information storage section (15401) adapted to store one or more pieces of electronic equipment related information for accessing the electronic equipment; where the index information shows an address at which the electronic equipment identifier exists in the electronic equipment identifier index correspondence management section, and where the electronic equipment identifier shows an address at which the electronic equipment related information exists in the electric equipment related information storage section;
an electronic equipment identifier index correspondence management section (15402) adapted to store an electronic equipment identifier corresponding to index information;
a send information receiving section (15403) adapted to receive the send information from the electronic equipment;
an information accessing section (15404) adapted to obtain the electronic equipment identifier based on the index information contained in the send information received by the send information receiving section, and
wherein the information accessing section is further adapted to access the electronic equipment related information based on the obtained electronic equipment identifier, the service device using the electronic equipment related information to access the electronic equipment.

3. A program, which when executed by a computer causes the computer to perform the following steps:
a send information receiving step of receiving send information from an electronic equipment;
an information accessing step of obtaining an electronic equipment identifier based on index information contained in the received send information and accessing electronic equipment related information based on the obtained electronic equipment identifier, and accessing the electronic equipment using the electronic equipment related information;
where the index information shows an address at which the electronic equipment identifier exists, and where the electronic equipment identifier shows an address at which the electronic equipment related information exists.

4. An information processing method comprising:
a send information receiving step of receiving send information from an electronic equipment;
an information accessing step of obtaining an electronic equipment identifier based on index information contained in the received send information and accessing electronic equipment related information based on the obtained electronic equipment identifier, and accessing the electronic equipment using the electronic equipment related information;
where the index information shows an address at which the electronic equipment identifier exists, and where the electronic equipment identifier shows an address at which the electronic equipment related information exists.

## Patentansprüche

1. Informationsverarbeitungssystem, das ein elektronisches Gerät (151) und eine Server-Vorrichtung (154) umfasst,
wobei das elektronische Gerät umfasst:
einen Indexinformations-Speicherabschnitt (15102), der so eingerichtet ist, dass er Indexinformationen speichert, die Informationen zum Beziehen einer Kennung des elektronischen Gerätes sind und die eine Adresse zeigen, an der die Kennung des elektronischen Gerätes in der Servervorrichtung vorhanden ist; und
einen Sendeinformations-Sendeabschnitt (15103), der so eingerichtet ist, dass er Indexinformationen von dem Indexinformations-Speicherabschnitt bezieht und Sendeinformationen, die die Indexinformationen enthalten, zu der Server-Vorrichtung sendet, und
wobei die Server-Vorrichtung umfasst:
einen Abschnitt (15401) zum Speichern von Informationen bezüglich des elektronischen Gerätes, der so eingerichtet ist, dass er ein oder mehrere Element/e von Informationen bezüglich des elektronischen Gerätes zum Zugreifen auf das elektronische Gerät speichert;
einen Abschnitt (15402) zum Verwalten einer Entsprechung der Kennung des elektronischen Gerätes und der Indexinformationen, der so eingerichtet ist, dass er eine Kennung des elektronischen Gerätes speichert, die den Indexinformationen entspricht, wobei die Kennung des elektronischen Gerätes ein Adresse zeigt, an der die Informationen bezüglich des elektronischen Gerätes in dem Abschnitt zum Speichern von Informationen bezüglich des elektronischen Gerätes vorhanden sind;
einen Sendeinformations-Empfangsabschnitt (15403), der so eingerichtet ist, dass er die Sendeinformationen von dem elektronischen Gerät empfängt;
einen Abschnitt (15404) zum Zugreifen auf Informationen, der so eingerichtet ist, dass er die Kennung des elektronischen Gerätes auf Basis der Indexinformationen bezieht, die in den durch den Sendeinformations-Empfangsabschnitt empfangenen Sendeinformationen enthalten sind, und
wobei der Abschnitt zum Zugreifen auf Informationen des Weiteren so eingerichtet ist, dass er auf die Informationen bezüglich des elektronischen Gerätes auf Basis der bezogenen Kennung des elektronischen Gerätes zugreift, und die Server-Vorrichtung die Informationen bezüglich des elektronischen Gerätes verwendet, um auf das elektronische Gerät zuzugreifen.

2. Server-Vorrichtung (154), die umfasst:
einen Abschnitt (15401) zum Speichern von Informationen bezüglich des elektronischen Gerätes, der so eingerichtet ist, dass er ein oder mehrere Element/e von Informationen bezüglich des elektronischen Gerätes zum Zugreifen auf das elektronische Gerät speichert, wobei die Indexinformationen eine Adresse zeigen, an der die Kennung des elektronischen Gerätes in dem Abschnitt zum Verwalten einer Entsprechung der Kennung des elektronischen Gerätes und der Indexinformationen vorhanden ist, und die Kennung des elektronischen Gerätes eine Adresse zeigt, an der die Informationen bezüglich des elektronischen Gerätes in dem Abschnitt zum Speichern von Informationen bezüglich des elektronischen Gerätes vorhanden sind;
einen Abschnitt (15402) zum Verwalten einer Entsprechung der Kennung des elektronischen Gerätes und der Indexinformationen, der so eingerichtet ist, dass er eine Kennung des elektronischen Gerätes speichert, die den Indexinformationen entspricht,
einen Sendeinformations-Empfangsabschnitt (15403), der so eingerichtet ist, dass er die Sendeinformationen von dem elektronischen Gerät empfängt;
einen Abschnitt (15404) zum Zugreifen auf Informationen, der so eingerichtet ist, dass er die Kennung des elektronischen Gerätes auf Basis der Indexinformationen bezieht, die in den durch den Sendeinformations-Empfangsabschnitt empfangenen Sendeinformationen enthalten sind, und
wobei der Abschnitt zum Zugreifen auf Informationen des Weiteren so eingerichtet ist, dass er auf die Informationen bezüglich des elektronischen Gerätes auf Basis der bezogenen Kennung des elektronischen Gerätes zugreift, und die Server-Vorrichtung die Informationen bezüglich des elektronischen Gerätes verwendet, um auf das elektronische Gerät zuzugreifen.

3. Programm, das, wenn es von einem Computer ausgeführt wird, den Computer veranlasst, die folgenden Schritte durchzuführen:
einen Schritt zum Empfangen von Sendeinformationen, in dem Sendeinformationen von einem elektronischen Gerät empfangen werden;
einen Schritt zum Zugreifen auf Informationen, in dem eine Kennung des elektronischen Gerätes auf Basis von Indexinformationen bezogen wird, die in den empfangenen Sendeinformationen enthalten sind, in dem auf Informationen bezüglich des elektronischen Gerätes auf Basis der bezogenen Kennung des elektronischen Gerätes zugegriffen wird, und in dem auf das elektronische Gerät unter Verwendung der Informationen bezüglich des elektronischen Gerätes zugegriffen wird;
wobei die Indexinformationen eine Adresse zeigen, an der die Kennung des elektronischen Gerätes vorhanden ist, und die Kennung des elektronischen Gerätes eine Adresse zeigt, an der die Informationen bezüglich des elektronischen Gerätes vorhanden sind.

4. Informationsverarbeitungsverfahren, das umfasst:
einen Schritt zum Empfangen von Sendeinformationen, in dem Sendeinformationen von einem elektronischen Gerät empfangen werden;
einen Schritt zum Zugreifen auf Informationen, in dem eine Kennung des elektronischen Gerätes auf Basis von Indexinformationen bezogen wird, die in den empfangenen Sendeinformationen enthalten sind, in dem auf Informationen bezüglich des elektronischen Gerätes auf Basis der ermittelten Kennung des elektronischen Gerätes zugegriffen wird, und in dem auf das elektronische Gerät unter Verwendung der Informationen bezüglich des elektronischen Gerätes zugegriffen wird;
wobei die Indexinformationen eine Adresse zeigen, an der die Kennung des elektronischen Gerätes vorhanden ist, und die Kennung des elektronischen Gerätes eine Adresse zeigt, an der die Informationen bezüglich des elektronischen Gerätes vorhanden sind.

## Revendications

1. Système de traitement d'informations comprenant un équipement électronique (151) et un serveur (154),
l'équipement électronique comprenant :
une section de maintien d'informations d'index (15 102) conçue pour maintenir des informations d'index, c'est à dire des informations permettant d'obtenir un identificateur d'équipement électronique et qui représentent une adresse à laquelle se trouve l'identificateur d'équipement électronique dans le serveur, et
une section d'envoi d'informations à expédier (15 103) conçue pour récupérer des informations d'index de la section de maintien d'informations d'index et pour envoyer au serveur des informations à expédier contenant les informations d'index, et
le serveur comprenant :
une section de mémorisation d'informations liés à l'équipement électronique (15 401) conçue pour mémoriser un ou plusieurs éléments d'informations liés à l'équipement électronique pour accéder à l'équipement électronique,
une section de gestion de correspondances d'index d'identificateur d'équipement électronique (15 402) conçue pour mémoriser un identificateur d'équipement électronique correspondant aux informations d'index, l'identificateur d'équipement électronique, représentant une adresse à laquelle se trouvent les informations liés à l'équipement électronique dans la section de mémorisation d'informations liés à l'équipement électronique,
une section de réception des informations à expédier (15 403) conçue pour recevoir de l'équipement électronique les informations à expédier,
une section d'accès aux informations (15 404) conçue pour récupérer l'identificateur d'équipement électronique sur la base des informations d'index contenues dans les informations à expédier reçues par la section de réception des informations à expédier, et
dans lequel la section d'accès aux informations est en outre conçue pour accéder aux informations liés à l'équipement électronique sur la base de l'identificateur d'équipement électronique récupéré, le serveur utilisant les informations liés à l'équipement électronique afin d'accéder à l'équipement électronique.

2. Serveur (154) comprenant :
une section de mémorisation d'informations liés à l'équipement électronique (15 401) conçue pour mémoriser un ou plusieurs éléments d'informations liés à l'équipement électronique pour accéder à l'équipement électronique, où les informations d'index représentent une adresse à laquelle se trouve l'identificateur d'équipement électronique dans la section de gestion de correspondances d'index d'identificateur d'équipement électronique, et où l'identificateur d'équipement électronique représente une adresse à laquelle se trouve les informations liés à l'équipement électronique dans la section de mémorisation d'informations liés à l'équipement électronique,
une section de gestion de correspondances d'index d'identificateur d'équipement électronique (15 402) conçue pour mémoriser un identificateur d'équipement électronique correspondant à des informations d'index,
une section de réception des informations à expédier (15 403) conçue pour recevoir les informations à expédier provenant de l'équipement électronique,
une section d'accès aux informations (15 404) conçue pour récupérer l'identificateur d'équipement électronique sur la base des informations d'index contenues dans les informations à expédier reçues par la section de réception des informations à expédier, et
dans lequel la section d'accès aux informations est en outre conçue pour accéder aux informations liés à l'équipement électronique sur la base de l'identificateur d'équipement électronique récupéré, le serveur utilisant les informations liés à l'équipement électronique afin d'accéder à l'équipement électronique.

3. Programme qui, lorsqu'il est exécuté par un ordinateur amène l'ordinateur à exécuter les étapes suivantes :
une étape de réception d'informations à expédier consistant à recevoir des informations à expédier provenant d'un équipement électronique,
une étape d'accession aux informations consistant à récupérer un identificateur d'équipement électronique sur la base d'informations d'index contenues dans les informations à expédier reçues et consistant à accéder aux informations liés à l'équipement électronique sur la base de l'identificateur d'équipement électronique récupéré, ainsi qu'à accéder à l'équipement électronique en utilisant les informations liés à l'équipement électronique,
où les informations d'index représentent une adresse à laquelle se trouve l'identificateur d'équipement électronique, et où l'identificateur d'équipement électronique représente une adresse à laquelle se trouvent les informations liés à l'équipement électronique.

4. Procédé de traitement d'informations comprenant :
une étape de réception des informations à expédier consistant à recevoir des informations à expédier provenant d'un équipement électronique,
une étape d'accession aux informations consistant à récupérer un identificateur d'équipement électronique sur la base d'informations d'index contenues dans les informations à expédier reçues et consistant à accéder aux informations liés à l'équipement électronique sur la base de l'identificateur d'équipement électronique récupéré, ainsi qu'à accéder à l'équipement électronique en utilisant les informations liés à l'équipement électronique,
où les informations d'index représentent une adresse à laquelle se trouve l'identificateur d'équipement électronique, et où l'identificateur d'équipement électronique représente une adresse à laquelle se trouvent les informations liés à l'équipement électronique.
